# EUROPÄISCHE PATENTANMELDUNG

(11) **EP 0 768 490 A1**
(43) Veröffentlichungstag der Anmeldung: **16.04.1997**
(21) Anmeldenummer: 95116220.5
(22) Anmeldetag: 14.10.1995
(51) Int. Cl.: F16L 47/00

(54) **Rohrverbindung**

(71) Anmelder: R. Woeste & Co. GmbH & Co. KG, D-42551 Velbert (DE)
(72) Erfinder: Lieber, Gerhard, D-42579 Heiligenhaus (DE); Woeste, Albrecht, Dipl.-Ing., D-40237 Düsseldorf (DE)
(74) Vertreter: Stenger, Watzke & Ring Patentanwälte

(57) **Zusammenfassung**

Die Erfindung betrifft eine Rohrverbindung zwischen einem Metallrohrstück (1) und einem Kunststoffrohrstück (8) mit einer im Endbereich auf dem Metallrohrstück (1) angeordneten und mit diesem unverdrehbar und axial unverschiebbar verbundenen Muffe (3) aus Metall sowie mit einem die Muffe (3) umhüllenden Spritzgußformstück (7), das einstückig mit dem Kunststoffrohrstück (8) ausgebildet ist. Um einerseits eine optimale Dichtwirkung und andererseits eine hohe Sicherheit der Rohrverbindung gegen Belastungen durch axiale und radiale Zugkräfte zu erzielen, ist die Muffe (3) in ihrer Mantelfläche mit mindestens einer Nut (3a) für einen Dichtring (5) versehen und der Dichtring (5) von einer nach dem Aufbringen des Spritzgußformstückes (7) einen integralen Bestandteil desselben bildenden Kunststoffhülse (6) umgeben, die bei der Herstellung des Spritzgußformstückes (7) den Dichtring (5) schützt.

## Beschreibung

Die Erfindung betrifft eine Rohrverbindung zwischen einem Metallrohrstück und einem Kunststoffrohrstück, insbesondere zum Anschluß von in Gebäuden verlegten Gas- und Wasserleitungsrohren an das im Boden verlegte Versorgungsnetz.

Aus der EP-B1-0 537 377 ist eine derartige Rohrverbindung mit einer im Endbereich auf dem Metallrohrstück angeordneten und mit diesem unverdrehbar und axial unverschiebbar verbundenen Muffe aus Metall und mit einem die Muffe umhüllenden Spritzgußformstück bekannt, das einstückig mit dem Kunststoffrohrstück ausgebildet ist, wobei im Bereich der Muffe mindestens ein Dichtungsring angeordnet ist.

Der Erfindung liegt die **Aufgabe** zugrunde, eine Rohrverbindung der eingangs beschriebenen Art derart weiterzubilden, daß einerseits Dichtungsringe mit größeren Querschnitten verwendet werden können und andererseits über den Metallteilen eine optimale Kunststoff-Wandstärke möglich ist.

Die **Lösung** dieser Aufgabenstellung durch die Erfindung ist dadurch gekennzeichnet, daß die Muffe in ihrer Mantelfläche mit mindestens einer Nut für einen Dichtring versehen ist und daß der Dichtring von einer nach dem Aufbringen des Spritzgußformstückes einen integralen Bestandteil desselben bildenden Kunststoffhülse umgeben ist.

Bei der erfindungsgemäßen Weiterbildung können in der Muffe wegen ihrer gegenüber dem Metallrohrstück größeren Wandstärke Dichtringe mit großem Querschnitt untergebracht werden. Da die mit dem Metallrohrstück verbundene Muffe vom Material des Spritzgußformstückes formschlüssig hintergriffen wird, ergibt sich eine hohe Sicherheit der erfindungsgemäßen Rohrverbindung gegen axiale und radiale Zugkräfte.

Gemäß einem weiteren Merkmal der Erfindung kann die Muffe auf einem Teil ihrer Mantelfläche mit nach Aufbringen des Spritzgußformstückes mit Kunststoff ausgefüllten, als Verdrehsicherung wirkenden Vertiefungen versehen sein, die vorzugsweise als Anbohrungen und/oder Längsrillen ausgebildet werden.

Weiterhin wird mit der Erfindung vorgeschlagen, die Muffe mit einer im Durchmesser abgestuften Mantelfläche auszubilden und im Bereich des größeren Durchmessers die Vertiefungen und im Bereich des kleineren Durchmessers die Nut oder Nuten für jeweils einen Dichtring auszubilden. Der hiermit erzielte größere Außendurchmesser erhöht den Hintergriff des Kunststoffes und damit die Sicherheit gegen axiales Abziehen des Spritzgußformstückes vom Metallrohrstück. Im Bereich des kleineren Durchmessers der Metallfläche sind die Dichtringe angeordnet, wobei die rechtwinklig zur Muffenlängsachse verlaufende Ringfläche zwischen dem größeren und dem kleineren Außendurchmesser einen Anschlag für die auf die Muffe aufzuschiebende Kunststoffhülse bildet.

Bei einer bevorzugten Ausführungsform sind sowohl die Nut als auch der Dichtring mit rechteckigem Querschnitt ausgeführt. Um die Muffe unverdrehbar und axial unverschiebbar mit dem Metallrohrstück zu verbinden, wird diese vorzugsweise mit dem Metallrohrstück gasdicht verschweißt.

Gemäß einem weiteren Merkmal der Erfindung ist das Metallrohrstück mit einer sich beim Aufbringen des Spritzgußformstückes mit diesem verbindenden Kunststoffumhüllung versehen. Hierdurch wird zugleich eine zuverlässige Verbindung des Kunststoffrohrstückes mit dem Metallrohrstück erzielt, da die auf das Metallrohrstück aufgebrachte Kunststoffumhüllung sehr zuverlässig auf diesem haftet.

Mit der Erfindung wird schließlich vorgeschlagen, das Metallrohrstück und die Muffe aus Stahl und sowohl das Spritzgußformstück mit dem Kunststoffrohrstück als auch die Kunststoffhülse aus Polyäthylen herzustellen.

Auf der Zeichnung ist ein Ausführungsbeispiel der erfindungsgemäßen Rohrverbindung dargestellt, und zwar zeigen:
- Fig. 1: eine in der unteren Hälfte geschnittene Seitenansicht der Rohrverbindung und
- Fig. 2: eine der Fig. 1 entsprechende Darstellung vor dem Aufbringen des Spritzgußformstückes.

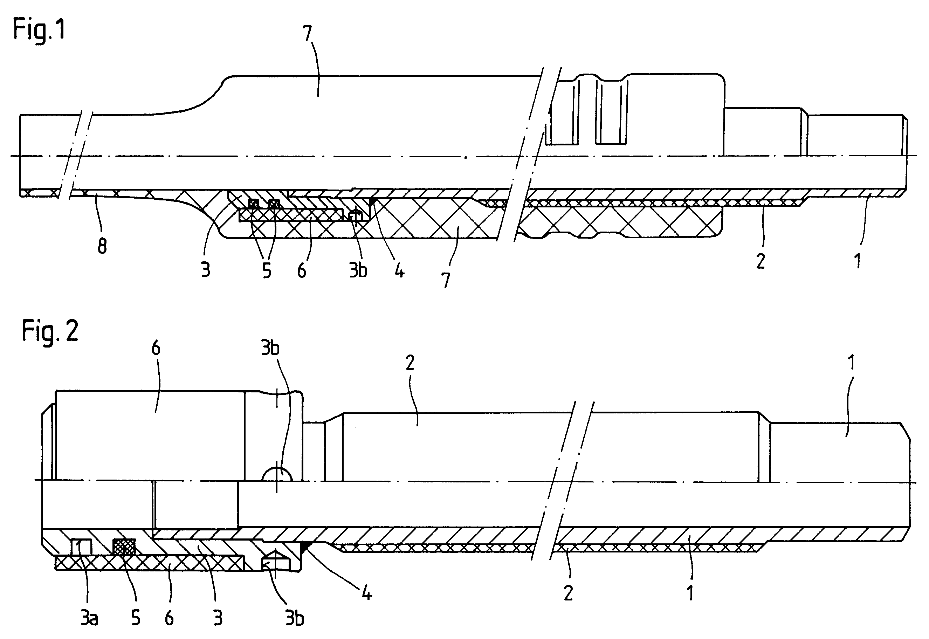

Die in Fig. 1 im fertigen Zustand gezeigte Rohrverbindung dient vorzugsweise dem Anschluß von in Gebäuden verlegten Gas- und Wasserleitungsrohren an das im Boden verlegte Versorgungsnetz. Bei einer derartigen Verbindung von Rohren aus verschiedenen Materialien, nämlich einerseits aus Metall und andererseits aus Kunststoff, ergeben sich immer dann Probleme, wenn die Verbindung der Rohre auch über einen langen Zeitraum dicht sein muß. Die anhand eines Ausführungsbeispiels dargestellte Rohrverbindung wird zwischen dem Ende einer Rohrleitung aus Metall und dem Ende einer Rohrleitung aus Kunststoff angeordnet, wobei die jeweiligen Rohrenden mit den freien Enden des Metallrohrstückes bzw. Kunststoffrohrstückes verbunden, vorzugsweise verschweißt, werden.

Zur Vorbereitung der in Fig. 1 im fertigen Zustand dargestellten Rohrverbindung wird gemäß Fig. 2 zuerst ein Metallrohrstück 1 vorbereitet, das mit einer Kunststoffumhüllung 2 versehen ist. An dem in Fig. 2 links liegenden Ende des Metallrohrstückes 1 wird dieses durch Abdrehen derart bearbeitet, daß im Endbereich die Kunststoffumhüllung 2 entfernt und ein Sitz für eine Muffe 3 geschaffen wird. Diese Muffe 3 besteht ebenso wie das Rohrstück 1 aus Metall, vorzugsweise Stahl. In der einfachsten Form wird die auf das Ende des Metallrohrstückes 1 aufgeschobene Muffe 3 mit dem Metallrohrstück 1 durch eine Schweißnaht 4 gasdicht verschweißt. Die Muffe 3 kann aber auch auf andere Weise unverdrehbar und axial unverschiebbar mit dem Metallrohrstück 1 gasdicht verbunden sein.

Beim dargestellten Ausführungsbeispiel ist auch das in Fig. 2 rechts liegende Ende des Metallrohrstückes 1 überdreht, um ein späteres Anschließen der Rohrverbindung an ein Metallrohr vorzubereiten.

Wie insbesondere aus Fig. 2 hervorgeht, sind in der Mantelfläche der Muffe 3 beim Ausführungsbeispiel zwei Nuten 3a ausgebildet, die beim dargestellten Ausführungsbeispiel einen rechteckigen Nutquerschnitt haben. In diese Nuten 3a wird jeweils ein Dichtring 5 mit ebenfalls rechteckigem Ringquerschnitt eingelegt. Ein derartiger Dichtring 5 ist in Fig. 2 zuerkennen, wogegen der zweite Dichtring zur Darstellung der Nut 3a in Fig. 2 nicht gezeichnet ist. Die Dichtringe 5 bestehen vorzugsweise aus dauerelastischem Material, vorzugsweise geeignetem Kunststoff. Die Dichtringe 5 können jedoch auch jeden anderen geeigneten Querschnitt aufweisen.

In einem bezüglich des Außendurchmessers vergrößerten Abschnitt der Muffe 3 sind mehrere Vertiefungen 3b ausgebildet. Auf dem Bereich der Mantelfläche mit dem kleinere Durchmesser, in deren Bereich die beiden Nuten 3a ausgebildet sind, ist auf die Muffe 3 eine Kunststoffhülse 6 aufgesetzt, die mit ihrer Stirnfläche an der Ringfläche der Muffe 3 anliegt, die sich rechtwinklig zur Längsachse der Muffe 3 zwischen der Mantelfläche mit dem größeren Durchmesser und der Mantelfläche mit dem kleineren Durchmesser ergibt. Dieser Zustand ist insgesamt in Fig. 2 zu erkennen.

Das dementsprechend vorbereitete, mit der Muffe 3, den Dichtringen 5 und der Kunststoffhülse 6 versehene Metallrohrstück 1 wird nunmehr in eine Spritzgießform eingelegt und mit einem die Muffe 3 und das Metallrohrstück 1 umhüllenden Spritzformstück 7 versehen, das zugleich einstückig mit einem Kunststoffrohrstück 8 ausgeführt ist. Im Bereich der auf dem Metallrohrstück 1 verbliebenen Kunststoffumhüllung 2 verbindet sich das Spritzgußformstück 7 mit dem Kunststoff der Umhüllung 2. Die Muffe 3 wird von dem Material des Spritzgußformstückes 7 umhüllt, wobei das Material in die Vertiefungen 3b der Muffe 3 eintritt und auf diese Weise eine Verdrehsicherung bildet. Durch den Hintergriff des Materials des Spritzgußformstückes 7 hinter die Muffe 3 ergibt sich gleichzeitig eine formschlüssige Sicherung gegen axiale und radiale Zugkräfte, die im Sinne einer Trennung auf die Rohrstücke 1 und 8 der Rohrverbindung ausgeübt werden.

Beim Aufbringen des Spritzgußformstückes, das bei Temperaturen in der Größenordnung von 200° C erfolgt, verbindet sich die aus demselben Kunststoff hergestellte Kunststoffhülse 6 als integraler Bestandteil mit dem Spritzgußformstück 7. Während der Aufbringung des Spritzgußformstückes 7 dient die Kunststoffhülse 6 als Schutz der Dichtringe 5.

Die im fertigen Zustand in Fig. 1 dargestellte Rohrverbindung schafft nicht nur eine zuverlässige Verbindung des Metallrohrstückes 1 mit dem Kunststoffrohrstück 8, welche verdrehsicher und hohen axialen Zugbelastungen gewachsen ist, sondern ergibt auch eine zuverlässige Abdichtung zwischen Metallrohrstück 1 und einstückig mit dem Spritzgußformstück 7 ausgebildetem Kunststoffrohrstück 8. Die bei der Herstellung des Spritzgußformstückes 7 durch die Kunststoffhülse 6 geschützten Dichtringe 5 garantieren wie auch die stoffschlüssige Verbindung zwischen Kunststoffumhüllung 2 und Spritzgußformstück 7 eine dauerhafte Dichtigkeit der Rohrverbindung.

### Bezugszeichenliste:

- 1: Metallrohrstück
- 2: Kunststoffumhüllung
- 3: Muffe
- 3a: Nut
- 3b: Vertiefung
- 4: Schweißnaht
- 5: Dichtring
- 6: Kunststoffhülse
- 7: Spritzgußformstück
- 8: Kunststoffrohrstück

## Patentansprüche

1. Rohrverbindung zwischen einem Metallrohrstück (1) und einem Kunststoffrohrstück (8), insbesondere zum Anschluß von in Gebäuden verlegten Gas- und Wasserleitungsrohren an das im Boden verlegte Versorgungsnetz, mit einer im Endbereich auf dem Metallrohrstück (1) angeordneten und mit diesem unverdrehbar und axial unverschiebbar verbundenen Muffe (3) aus Metall und mit einem die Muffe (3) umhüllenden Spritzgußformstück (7), das einstückig mit dem Kunststoffrohrstück (8) ausgebildet ist, wobei im Bereich der Muffe (3) mindestens ein Dichtring (5) angeordnet ist,
**dadurch gekennzeichnet,**
daß die Muffe (3) in ihrer Mantelfläche mit mindestens einer Nut (3a) für einen Dichtring (5) versehen ist und daß der Dichtring (5) von einer nach dem Aufbringen des Spritzgußformstückes (7) einen integralen Bestandteil desselben bildenden Kunststoffhülse (6) umgeben ist.

2. Rohrverbindung nach Anspruch 1, dadurch gekennzeichnet, daß die Muffe (3) auf einem Teil ihrer Mantelfläche mit nach Aufbringen des Spritzgußformstückes (7) mit Kunststoff ausgefüllten, als Verdrehsicherung wirkenden Vertiefungen (3b) versehen ist.

3. Rohrverbindung nach Anspruch 2, dadurch gekennzeichnet, daß die Vertiefungen (3b) als Anbohrungen und/oder Längsrillen ausgebildet sind.

4. Rohrverbindung nach mindestens einem der Ansprüche 1 bis 3, dadurch gekennzeichnet, daß die Muffe (3) mit einer im Durchmesser abgestuften Mantelfläche ausgebildet ist und daß im Bereich des größeren Durchmessers die Vertiefungen (3b) und im Bereich des kleineren Durchmessers die Nut (3a) oder Nuten für jeweils einen Dichtring (5) ausgebildet sind.

5. Rohrverbindung nach mindestens einem der Ansprüche 1 bis 4, dadurch gekennzeichnet, daß die Nut (3a) mit rechteckigem Querschnitt und der Dichtring (5) mit rechteckigem oder jedem anderen geeigneten Querschnitt ausgeführt sind.

6. Rohrverbindung nach Anspruch 1, dadurch gekennzeichnet, daß die Muffe (3) mit dem Metallrohrstück (1) gasdicht verschweißt ist.

7. Rohrverbindung nach mindestens einem der Ansprüche 1 bis 6, dadurch gekennzeichnet, daß das Metallrohrstück (1) mit einer sich beim Aufbringen des Spritzgußformstückes (7) mit diesem verbindenden Kunststoffumhüllung (2) versehen ist.

8. Rohrverbindung nach mindestens einem der Ansprüche 1 bis 7, dadurch gekennzeichnet, daß das Metallrohrstück (1) und die Muffe (3) aus Stahl und sowohl das Spritzgußformstück (7) mit dem Kunststoffrohrstück (8) als auch die Kunststoffhülse (6) aus Polyäthylen hergestellt sind.

9. Rohrverbindung nach mindestens einem der Ansprüche 1 bis 8, dadurch gekennzeichnet, daß das Spritzgußformstück (7) die Muffe (3) zur Sicherung gegen axiale Zugkräfte formschlüssig hintergreift.
